(19)

**Europäisches Patentamt**

**European Patent Office**

**Office européen des brevets**

(11) **EP 3 416 112 A1**

(12) **EUROPEAN PATENT APPLICATION**

(43) Date of publication:
**19.12.2018 Bulletin 2018/51**

(21) Application number: **18175972.1**

(22) Date of filing: **05.06.2018**

(51) Int Cl.:
**G06Q 10/06** (2012.01)          **G06Q 10/08** (2012.01)
**G06Q 10/04** (2012.01)          **G06Q 30/02** (2012.01)

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **16.06.2017   TW 106120100**

(71) Applicant: **Acer Incorporated**
**New Taipei City 221 (TW)**

(72) Inventors:
• **Li, Chun-Hsien**
  **221 New Taipei City (TW)**
• **Hsu, Yin-Hsong**
  **221 New Taipei City (TW)**
• **Li, Chien-Hung**
  **221 New Taipei City (TW)**
• **Tsai, Tsung-Hsien**
  **221 New Taipei City (TW)**
• **Chen, Pei-Jung**
  **221 New Taipei City (TW)**

(74) Representative: **Becker Kurig Straus**
**Patentanwälte**
**Bavariastrasse 7**
**80336 München (DE)**

(54) **METHOD AND SYSTEM OF PREDICTING PASSENGER DEMAND**

(57)     A method of predicting passenger demand (20) includes obtaining a plurality of affecting factors (202); obtaining a basic passenger demand corresponding to a geographical area at a specific time period (204); computing at least one first type predicted demands according to the plurality of affecting factors and the basic passenger demand (206); selecting at least one important affecting factor from the plurality of affecting factors, and computing at least one second type predicted demand according to the at least one important affecting factor (208); and computing a combined predicted passenger demand according to the first predicted passenger demand and the second predicted passenger demand (210).

FIG. 2

EP 3 416 112 A1

**Description**

Field of the Invention

The present invention relates to a method and a system of passenger demand prediction, and more particularly, to a method and a system of passenger demand prediction capable of predicting the passenger demand effectly and send the passenger demand to the taxi driver.

Background of the Invention

For taxi driver's point of view, how to enhance the profit is an important topic. In such a mobile communication developed era, using a backend platform to perform statistical analysis becomes more popular. For example, the dispatching system may use a terminal device (e.g., PDA or cell phone) to receive a passengers' request, the backend platform would also record and analyze the area in which the passengers' requests are dense. However, information of the passenger demand/request is local information, and it is hard to predict the variation on passengers' demand caused by the factors such as weather, local activities, traffic condition, etc. In addition, the taxi dispatch center would be concerned more about the whole revenue of the entire taxi company, and therefore hard to take care of each taxi driver. The taxis' drivers just passively stand by and wait for being dispatched, which lacks proactiveness. The taxis' drivers aimlessly driving in the streets in urban or suburban area would increase operation cost and air pollution.

Therefore, how to predict the passenger demand effectly and send the passenger demand to the taxi driver is a significant objective in the field.

Summary of the Invention

This in mind, the application aims at providing a method and a system of passenger demand prediction capable of predicting the passenger demand effectively and send the passenger demand to the taxi driver, to improve over disadvantages of the prior art.

This is achieved by a passenger demand prediction method and a passenger demand prediction system configured to predict a passenger demand of a geographical area at a specific time period according to claims 1 and 2. The dependent claims pertain to corresponding further developments and improvements.

As will be seen more clearly from the detailed description following below, the claimed passenger demand prediction method is configured to predict a passenger demand of a geographical area at a specific time period. The passenger demand prediction method comprises obtaining a plurality of measurements corresponding to a plurality of affecting factors, wherein the plurality of affecting factors are factors affecting the passenger demand of the geographical area at the specific time period; obtaining a basic passenger demand corresponding to the geographical area at the specific time period; computing at least one first type predicted demands according to the plurality of affecting factors and the basic passenger demand; selecting at least one important affecting factor from the plurality of affecting factors, and computing at least one second type of predicted demands according to the at least one important affecting factor; and computing a combined predicted demand according to the first type predicted demands and the second type predicted demands.

Furthermore, the claimed passenger demand prediction system is configured to predict a passenger demand of a geographical area at a specific time period. The passenger demand prediction system comprises a cloud device comprising a processing unit; a storage unit, configured to store a program code, wherein the program code is configured to instruct the processing unit to execute the following steps: obtaining a plurality of measurements corresponding to a plurality of affecting factors, wherein the plurality of affecting factors are factors affecting the passenger demand of the geographical area at the specific time period; obtaining a basic passenger demand corresponding to the geographical area at the specific time period; computing at least one first type predicted demands according to the plurality of affecting factors and the basic passenger demand; selecting at least one important affecting factor from the plurality of affecting factors, and computing at least one second type of predicted demands according to the at least one important affecting factor; and computing a combined predicted demand according to the first type predicted demands and the second type predicted demands; and a terminal device, configured to receive the combined predicted demand.

Brief Description of the Drawings

FIG. 1 is a schematic diagram of a passenger demand prediction system according to an embodiment of the present invention.

FIG. 2 is a schematic diagram of a prediction process according to an embodiment of the present invention.
FIG. 3 is a schematic diagram of a process according to an embodiment of the present invention.
FIG. 4 is a schematic diagram of a process according to an embodiment of the present invention.
FIG. 5 is a schematic diagram of a process according to an embodiment of the present invention.
FIG. 6 is a schematic diagram of a process according to an embodiment of the present invention.

Detailed Description

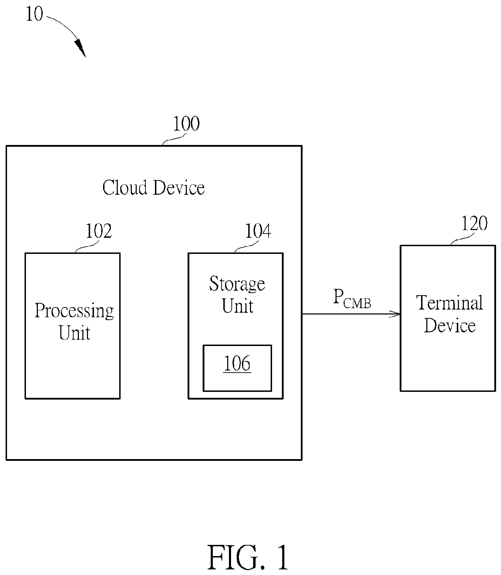

FIG. 1 is a schematic diagram of a passenger demand prediction system 10 according to an embodiment of the present invention. The passenger demand prediction system 10 is configured to predict a demand of passengers for a taxi (hereinafter, "passenger demand") in a geographical area ZN in a specific time period TM, and send the passenger demand to the taxi driver or staff in the taxi dispatch center. The passenger demand prediction system 10 comprises a cloud device 100 and a terminal device 120. The cloud device 100 is an electronic device with computational capability such as a computer or a server. The cloud device 100 comprises a processing unit 102 and a storage unit 104. The storage unit 104 may be configured to store a program code 106. The program code 106 is configured to instruct the processing unit 102 to execute a prediction process, to predict the passenger demand for a taxi in different geographical areas in different time periods. The terminal device 120 may be held by a taxi driver (or the taxi dispatch center), which may be a personal electronic device (e.g., mobile phone) or vehicular electronic device. The terminal device 120 may connect to the cloud device 100 to obtain the predicted passenger demand of various geographical areas and various time periods, such that the taxi driver may decide which direction he/she would like to drive according to the predicted passenger demand.

The geographical area ZN may be a specific geographical region. In an embodiment, the geographical area ZN may be a geographical block region. That is, the geographical area ZN may be a geographical area where the longitude of which is within a first specific range and the latitude of which is within a second specific range, but not limited thereto. In addition, the specific time period TM may be a time period in a day within a week. For example, the specific time period TM may be "10:00:00 AM-10:30:00AM on Monday".

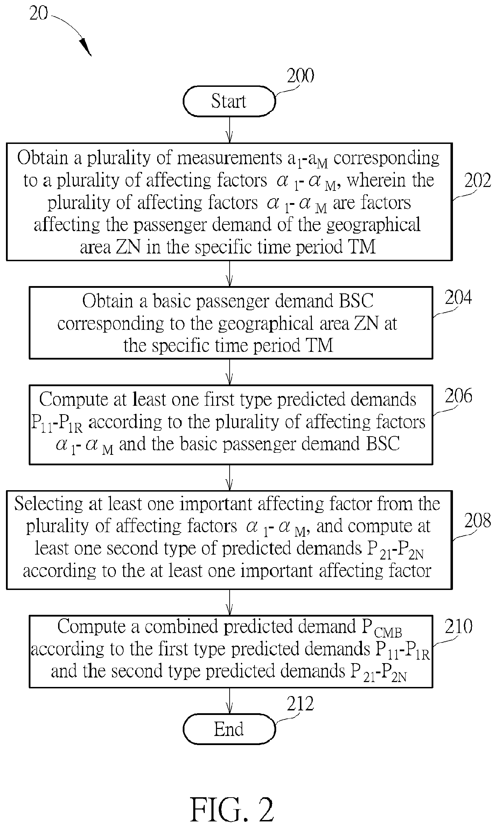

FIG. 2 is a schematic diagram of a prediction process 20 according to an embodiment of the present invention. The prediction process 20 may be compiled as the program code 106 and executed by the cloud device 100. As shown in FIG. 2, the prediction process 20 comprises the following steps:

Step 200: Start.

Step 202: Obtain a plurality of measurements $a_1$-$a_M$ corresponding to a plurality of affecting factors $\alpha_1$-$\alpha_M$, wherein the plurality of affecting factors $\alpha_1$-$\alpha_M$ are factors affecting the passenger demand of the geographical area ZN in the specific time period TM.

Step 204: Obtain a basic passenger demand BSC corresponding to the geographical area ZN at the specific time period TM.

Step 206: Compute at least one first type predicted demands $P_{11}$-$P_{1R}$ according to the plurality of affecting factors $\alpha_1$-$\alpha_M$ and the basic passenger demand BSC.

Step 208: Selecting at least one important affecting factor from the plurality of affecting factors $\alpha_1$-$\alpha_M$, and compute at least one second type of predicted demands $P_{21}$-$P_{2N}$ according to the at least one important affecting factor.

Step 210: Compute a combined predicted demand $P_{CMB}$ according to the first type predicted demands $P_{11}$-$P_{1R}$ and the second type predicted demands $P_{21}$-$P_{2N}$.

Step 212: End.

In detail, in Step 202, the cloud device 100 obtains the plurality of measurements $a_1$-$a_M$ corresponding to the plurality of affecting factors $\alpha_1$-$\alpha_M$, wherein the plurality of affecting factors $\alpha_1$-$\alpha_M$ are factors affecting the passenger demand of the geographical area ZN in the specific time period TM. For example, the plurality of affecting factors $\alpha_1$-$\alpha_M$ may represent "the temperature of the geographical area ZN at the specific time period TM", "whether it rains in the geographical area ZN at the specific time period TM", "whether a large scale activity is held in in the geographical area ZN at the specific time period TM", etc., where the large scale activity may be a concert, an exhibition, a public speech, a parade, etc. In an embodiment, the plurality of measurements $a_1$-$a_M$ may be a true or false value corresponding to the affecting factors $\alpha_1$-$\alpha_M$, i.e., the plurality of measurements $a_1$-$a_M$ may be binary values. For instance, a measurement $a_m$ being 1 may represent "it rains in the geographical area ZN at the specific time period TM"; a measurement $a_m$ being 0 may represent "it has no rain in the geographical area ZN at the specific time period TM". In an embodiment, the plurality of measurements $a_1$-$a_M$ may represent a probability (or a degree) of the affecting factors $\alpha_1$-$\alpha_M$ happening. For

instance, a measurement $a_m$ may represent a rainfall probability or a rainfall degree in the geographical area ZN at the specific time period TM. In an embodiment, the cloud device 100 may connect to information system of a government agency (e.g., Central Weather Bureau) or a civil organization, so as to obtain the plurality of measurements $a_1$-$a_M$.

In Step 204, the cloud device 100 obtains the basic passenger demand BSC corresponding to the geographical area ZN at the specific time period TM. In an embodiment, the cloud device 100 may connect to a taxi transport management information system, so as to obtain an original data OG. The original data OG may comprise information about exact times and geographical coordinates (via GPS) of taxi picking-up events (the taxi picking-up events represent events of a taxi picking up passengers) in a past time period. The past time period may be a month or a year, for instance, before the time at which the cloud device 100 accesses the taxi transport management information system, and a length of which may be determined according to practical situation, which is not limited thereto. After obtaining the original data OG, the cloud device 100 may process (e.g., organize) the original data OG, so as to obtain a historical demand HS in the geographical area ZN. The historical demand HS may comprise the passenger demand for taxis in the geographical area ZN at various time periods. TABLE I illustrates an example of the historical demand HS. For illustrative purposes, the historical demand HS illustrated in TABLE I lists the passenger demand (the historical demand HS) in 10:00-10:30 on Monday (first time period) and 14:00-14:30 on Thursday (second time period) during 3/7/2016-3/31/2016. According to the historical demand HS, the cloud device 100 may compute the basic passenger demand BSC corresponding to the first time period and the second time period. The basic passenger demand BSC may comprise an average, a median or a mode of the passenger demand for a taxi corresponding to the first time period and the second time period, which means that the basic passenger demand BSC may comprise a statistic of the passenger demand for a taxi corresponding to the first time period and the second time period. Preferably, the basic passenger demand BSC comprises the average of the passenger demand for a taxi corresponding to the first time period and the second time period. As shown in TABLE II, a basic passenger demand $BSC_1$ corresponding to the first time period is 25, and a basic passenger demand $BSC_2$ corresponding to the second time period is 9.

TABLE I

| Time Period | Day | Historical Demand HS in the geographical area ZN |
|---|---|---|
| **2016-03-07 10:00:00-10:30:00** | **Monday** | **10** |
| ... | ... | ... |
| 2016-03-10 14:00:00-14:30:00 | Thursday | 10 |
| ... | ... | ... |
| **2016-03-14 10:00:00-10:30:00** | **Monday** | **24** |
| ... | ... | ... |
| 2016-03-17 14:00:00-14:30:00 | Thursday | 3 |
| ... | ... | ... |
| **2016-03-21 10:00:00-10:30:00** | **Monday** | **40** |
| ... | ... | ... |
| 2016-03-24 14:00:00-14:30:00 | Thursday | 5 |
| ... | ... | ... |
| **2016-03-28 10:00:00-10:30:00** | **Monday** | **26** |
| ... | ... | ... |
| 2016-03-31 14:00:00-14:30:00 | Thursday | 9 |

TABLE II

| Day | Time Period | Basic Passenger Demand BSC in the geographical area ZN |
|---|---|---|
| **Monday** | **10:00:00-10:30:00** | **25** |
| ... | ... | ... |
| Thursday | 14:00:00-14:30:00 | 9 |

Notably, the basic passenger demand BSC may reflect the passenger demand at different times for different days. For example, the passenger demand of the time period of 10:00-10:30 on Monday would be different than on Sunday. In addition, the passenger demand on Monday at the time period of 10:00-10:30 would be different than at 14:00-14:30.

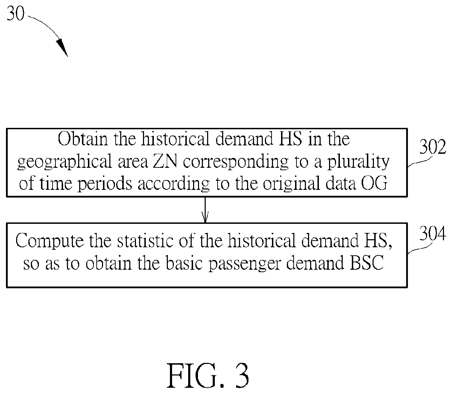

Operation of Step 204 may be summarized as a process 30. As shown in FIG. 3, the process 30 comprises the following steps:

Step 302:     Obtain the historical demand HS in the geographical area ZN corresponding to a plurality of time periods according to the original data OG.

Step 304:     Compute the statistic of the historical demand HS, so as to obtain the basic passenger demand BSC.

In Step 206, the cloud device 100 computes the at least one first type predicted demands $P_{11}$-$P_{1R}$ according to the plurality of affecting factors $\alpha_1$-$\alpha_M$ and the basic passenger demand BSC. In an embodiment, the cloud device 100 may utilize the method of regression analysis to analyze the relationship between the passenger demand and the plurality of affecting factors $\alpha_1$-$\alpha_M$, and select significant affecting factors from the plurality of affecting factors $\alpha_1$-$\alpha_M$ which have more impact on the passenger demand (equivalent to eliminating less significant affecting factors which have less impact on the passenger demand) so as to obtain the significant affecting factors $\alpha_{(1)}$-$\alpha_{(K)}$. In addition, the cloud device 100 also establishes a first type prediction model, and computes the first type predicted demands $P_{11}$-$P_{1R}$ according to the first type prediction model.

The cloud device 100 computes a plurality of variations $\Delta F_1$-$\Delta F_M$ of a passenger demand F generated/affected by the affecting factors $\alpha_1$-$\alpha_M$. The variation $\Delta F_n$ may be a difference between a passenger demand $F_{n,1}$ with considering the affecting factor $\alpha_n$ and a passenger demand $F_{n,0}$ without considering the affecting factor $\alpha_n$. The passenger demand $F_{n,1}$ may be the passenger demand corresponding to the measurement $a_n$=1, and passenger demand $F_{n,0}$ may be the passenger demand corresponding to the measurement $a_n$=0. In an embodiment, after the cloud device 100 obtains the variations $\Delta F_1$-$\Delta F_M$, the cloud device 100 may determine whether each variation $\Delta F_k$ of the variations $\Delta F_1$-$\Delta F_M$ is greater than a first specific value or not. If the variation $\Delta F_k$ is greater than the first specific value, it represents that the corresponding affecting factor $\alpha_k$ is significant and the affecting factor $\alpha_k$ is therefore retained. Otherwise, if the variation $\Delta F_k$ is less than the first specific value, it represents that the corresponding affecting factor $\alpha_k$ is less significant and the affecting factor $\alpha_k$ is therefore eliminated. After the selection and elimination process, for illustrative purposes, the affecting factors $\alpha_{(1)}$-$\alpha_{(K)}$ out of the affecting factors $\alpha_1$-$\alpha_M$ are significant affecting factors. The cloud device 100 may utilize the first type prediction model to compute the first type predicted demands $P_{11}$-$P_{1R}$ according to the basic passenger demand BSC and the measurement $a_{(1)}$-$a_{(K)}$ corresponding to the significant affecting factors $\alpha_{(1)}$-$\alpha_{(K)}$.

In an embodiment, one of the first type predicted demands $P_{11}$ may be computed as $P_{11}$=$BSC_{TM}$+$c1 \times a_{(1)}$+$c2 \times a_{(2)}$+$c3 \times a_{(3)}$+$c4 \times a_{(4)}$+$c5 \times a_{(5)}$ (equation 1), wherein $BSC_{TM}$ represents the basic passenger demand in the geographical area ZN corresponding to the specific time period TM, and c1-c5 represent coefficients corresponding to the significant affecting factors $\alpha_{(1)}$-$\alpha_{(5)}$ in the first type prediction model shown in equation 1. In the first type prediction model shown by equation 1, it comprises 5 measurements (i.e., $a_{(1)}$-$a_{(5)}$) of 5 significant affecting factors (i.e., $\alpha_{(1)}$-$\alpha_{(5)}$). In an embodiment, the significant affecting factors $\alpha_{(1)}$-$\alpha_{(5)}$ may be "whether it rains in the geographical area ZN at the specific time period TM", "whether a large scale activity is held in the geographical area ZN at the specific time period TM", "whether the is a mass transportation station in the geographical area ZN", "the longitude of the geographical area ZN" or "the latitude of the geographical area ZN", where the mass transportation station may be a bus transportation station, a railway station, an MRT (Mass Rapid Transit) station, an airport, a pier, etc. Details of Regression Analysis are known by the art, which is not narrated herein for brevity.

In an embodiment, the cloud device 100 may consider all affecting factors $\alpha_1$-$\alpha_M$ at one time, and eliminate the less significant factors according to the variations $\Delta F_1$-$\Delta F_M$ one by one. In an embodiment, the cloud device 100 may consider one affecting factor $\alpha_k$ at one time, and determine whether to retain or to eliminate the affecting factor $\alpha_k$ according to the variation $\Delta F_k$ of the passenger demand F by considering the affecting factor $\alpha_k$, which also satisfies requirements of the present invention.

In Step 208, the cloud device 100 selects at least one important affecting factor from the plurality of affecting factors $\alpha_1$-$\alpha_M$, and computes at least one second type of predicted demands $P_{21}$-$P_{2N}$ according to the at least one important affecting factor. Specifically, the cloud device 100 may compute/evaluate a plurality of significances $q_1$-$q_M$ of the plurality of affecting factors $\alpha_1$-$\alpha_M$ onto the passenger demand F, where each of the significances $q_1$-$q_M$ may have a value between 0 and 1, but not limited thereto. When the significance $q_{k'}$ corresponding to the affecting factor $\alpha_{k'}$ is greater than a second specific value (e.g., the second specific value may be 0.4), the cloud device 100 may determine the affecting factor $\alpha_{k'}$ as an important affecting factor. Otherwise, when the significance $q_{k'}$ corresponding to the affecting factor $\alpha_{k'}$ is less than the second specific value, the cloud device 100 may determine the affecting factor $\alpha_{k'}$ as an unimportant affecting factor. After the selection process state in the above, for illustrative purposes, the affecting factors

$\alpha_{<1>}$-$\alpha_{<K'>}$ among the affecting factors $\alpha_1$-$\alpha_M$ are selected as important affecting factors. Therefore, the cloud device 100 may establish a second type prediction model, and utilize the second type prediction model to compute the second type predicted demands $P_{21}$-$P_{2N}$ according to the important affecting factors $a_{<1>}$-$a_{<K'>}$.

In an embodiment, the cloud device 100 may utilize Random Forest method to establish multiple regression/decision trees, and to compute/evaluate the significances $q_1$-$q_M$ of the plurality of affecting factors $\alpha_1$-$\alpha_M$ onto the passenger demand F. Specifically, the historical demand HS within the geographical area ZN may be classified into $N_0$ subsets by repeated sampling. Models of the regression/decision tree for each subset is constructed, so as to determine whether the affecting factor $\alpha_{k'}$ (e.g., "whether it rains in the geographical area ZN at the specific time period TM") is adopted into the regression/decision tree. The cloud device 100 may collect a number of times of the affecting factor $\alpha_{k'}$ being adopted into the regression/decision tree (suppose that the number of times of the affecting factor $\alpha_{k'}$ being adopted into the regression/decision tree is $n_0$), in order to calculate a probability of the affecting factor $\alpha_{k'}$ being adopted into the regression/decision tree, which is $n_0/N_0$. The probability is the significance $q_{k'}$ corresponding to the affecting factor $\alpha_{K'}$. After performing the process of determining whether each of the significances $q_1$-$q_M$ is greater than the second specific value, the selected important affecting factor $\alpha_{<1>}$-$\alpha_{<K'>}$ may be utilized to construct the Random Forest. A second type prediction model is established according to the measurements $a_{<1>}$-$a_{<K'>}$ of the important affecting factor, and the second type predicted demands $P_{21}$-$P_{2N}$ is computed. Operations of constructing random trees/forest are known by the art, which is not narrated herein for brevity.

In an embodiment, about the significances for determining whether the affecting factor $\alpha_1$-$\alpha_M$ are the affecting factor, the over-fitting accurate added-value of the affecting factors in the decision tree model may also be used to determine the significances $q_1$-$q_M$.

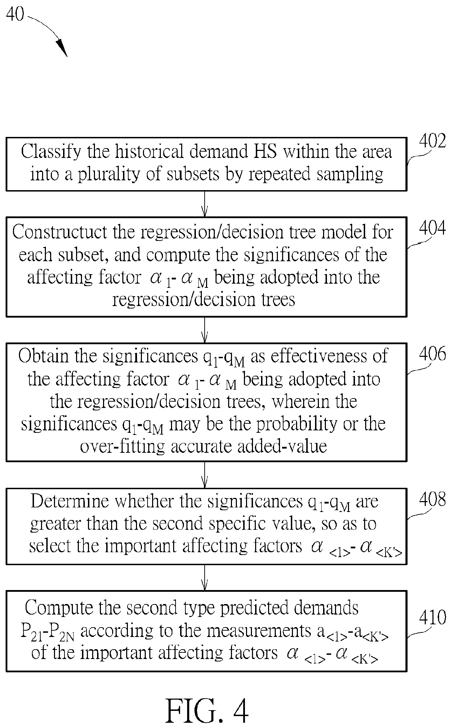

Operation of Step 208 may be summarized as a process 40. As shown in FIG. 4, the process 40 comprises the following steps:

Step 402: Classify the historical demand HS within the area into a plurality of subsets by repeated sampling.

Step 404: Construct the regression/decision tree model for each subset, and compute the significances of the affecting factor $\alpha_1$-$\alpha_M$ being adopted into the regression/decision trees.

Step 406: Obtain the significances $q_1$-$q_M$ as effectiveness of the affecting factor $\alpha_1$-$\alpha_M$ being adopted into the regression/decision trees, wherein the significances $q_1$-$q_M$ may be the probability or the over-fitting accurate added-value.

Step 408: Determine whether the significances $q_1$-$q_M$ are greater than the second specific value, so as to select the important affecting factors $\alpha_{<1>}$-$\alpha_{<K'>}$.

Step 410: Compute the second type predicted demands $P_{21}$-$P_{2N}$ according to the measurements $a_{<1>}$-$a_{<K'>}$ of the important affecting factors $\alpha_{<1>}$-$\alpha_{<K'>}$.

In Step 210, the cloud device 100 computes the combined predicted demand $P_{CMB}$ according to the first type predicted demands $P_{11}$-$P_{1R}$ and the second type predicted demands $P_{21}$-$P_{2N}$. Specifically, the cloud device 100 may execute Step 206 at a time instant $t_{-1}$, so as to obtain at least one first type preallocated passenger demands $F_{11}$-$F_{1R}$ corresponding to a time instant $t_0$. The cloud device 100 may also obtain the practical passenger demand T at the time instant $t_0$ from the taxi transport management information system. The cloud device 100 may compute first type preallocated errors $e_{11}$-$e_{1R}$ according to the preallocated passenger demands $F_{11}$-$F_{1R}$ and the practical passenger demand T. In addition, the cloud device 100 may execute Step 208 at the time instant $t_{-1}$, so as to obtain at least one second type preallocated passenger demands $F_{21}$-$F_{2N}$ of the time instant $t_0$. The cloud device 100 may also obtain the practical passenger demand T at the time instant $t_0$ from the taxi transport management information system. The cloud device 100 may compute second type preallocated errors $e_{21}$-$e_{2N}$ according to the second type preallocated passenger demand $F_{21}$-$F_{2N}$ and the practical passenger demand T. According to the first type preallocated errors $e_{11}$-$e_{1R}$ and the second type preallocated errors $e_{21}$-$e_{2N}$, the cloud device 100 may compute first type weightings $w_{11}$-$w_{1R}$ corresponding to the first type predicted demands $P_{11}$-$P_{1R}$ and second type weightings $w_{21}$-$w_{2N}$ corresponding to the second type predicted demands $P_{21}$-$P_{2N}$. The cloud device 100 may compute the combined predicted demand $P_{CMB}$ according to the first type predicted demands $P_{11}$-$P_{1R}$, the second type predicted demands $P_{21}$-$P_{2N}$, the first type weightings $w_{11}$-$w_{1R}$ and the second type weightings $w_{21}$-$w_{2N}$, so as to predict the passenger demand at the time instant $t_1$, where the time instant $t_{-1}$ is earlier than the time instant $t_0$, and the time instant $t_0$ is earlier than the time instant $t_1$, i.e., $t_{-1} < t_0 < t_1$.

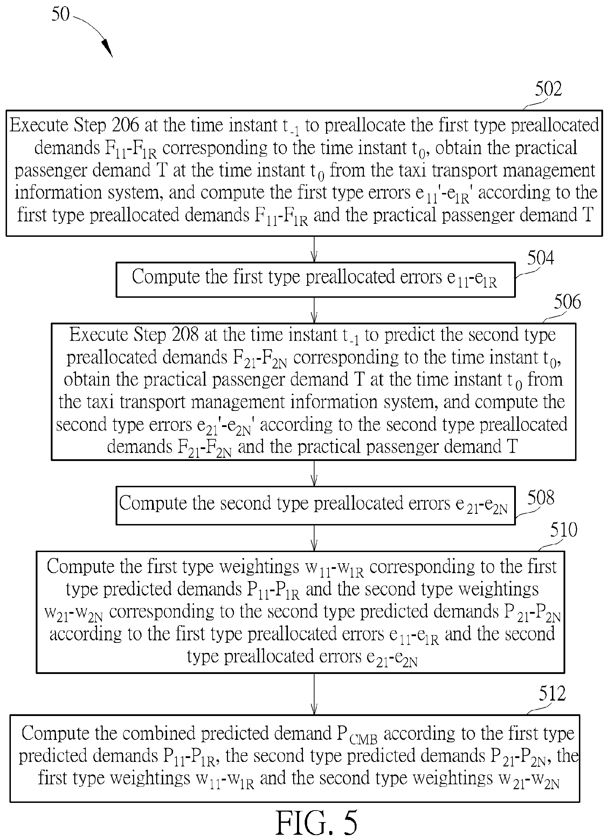

Operation of Step 210 may be summarized as a process 50. As shown in FIG. 5, the process 50 comprises the following steps:

Step 502: Execute Step 206 at the time instant $t_{-1}$ to preallocate the first type preallocated demands $F_{11}$-$F_{1R}$ corresponding to the time instant $t_0$, obtain the practical passenger demand T at the time instant $t_0$ from the taxi transport management information system, and compute the first type errors $e_{11}$'-$e_{1R}$' according to the first type preallocated demands $F_{11}$-$F_{1R}$ and the practical passenger demand T.

Step 504: Compute the first type preallocated errors $e_{11}$-$e_{1R}$.

Step 506: Execute Step 208 at the time instant $t_{-1}$ to predict the second type preallocated demands $F_{21}$-$F_{2N}$ corresponding to the time instant $t_0$, obtain the practical passenger demand T at the time instant $t_0$ from the taxi transport management information system, and compute the second type errors $e_{21}$'-$e_{2N}$' according to the second type preallocated demands $F_{21}$-$F_{2N}$ and the practical passenger demand T.

Step 508: Compute the second type preallocated errors $e_{21}$-$e_{2N}$.

Step 510: Compute the first type weightings $w_{11}$-$w_{1R}$ corresponding to the first type predicted demands $P_{11}$-$P_{1R}$ and the second type weightings $w_{21}$-$w_{2N}$ corresponding to the second type predicted demands $P_{21}$-$P_{2N}$ according to the first type preallocated errors $e_{11}$-$e_{1R}$ and the second type preallocated errors $e_{21}$-$e_{2N}$.

Step 512: Compute the combined predicted demand $P_{CMB}$ according to the first type predicted demands $P_{11}$-$P_{1R}$, the second type predicted demands $P_{21}$-$P_{2N}$, the first type weightings $w_{11}$-$w_{1R}$ and the second type weightings $w_{21}$-$w_{2N}$.

In Step 502 and Step 506, the time instant $t_{-1}$ and the time instant $t_0$ illustratively represent that the time instant $t_{-1}$ is earlier than the time instant $t_0$ and not limited to any specific time instants. In other words, within the specific geographical area ZN, the cloud device 100 may execute Step 502 and Step 506 repeatedly, to obtain the plurality of first type errors $e_{11}$'-$e_{1R}$' and the plurality of second type errors $e_{21}$'-$e_{2N}$'. The cloud device 100 may execute Step 504 and Step 508 to compute the first type preallocated errors $e_{11}$-$e_{1R}$ as statistics of the first type errors $e_{11}$'-$e_{1R}$' and compute the second type preallocated errors $e_{21}$-$e_{2N}$ as statistics of the second type errors $e_{21}$'-$e_{2N}$'. For example, the cloud device 100 may compute one first type preallocated error $e_{11}$ (the second type preallocated error $e_{21}$) as an average of the plurality of first type errors $e_{11}$'-$e_{1R}$' (the plurality of second type errors $e_{21}$'-$e_{2N}$'). In addition, when the cloud device 100 executes Step 502 and Step 506, the first type errors $e_{11}$' may be computed as $e_{11}$'=$|T-F_{11}|$, and the second type errors $e_{21}$' may be computed as $e_{21}$'=$|T-F_{21}|$, where $|\cdot|$ represents the operation of taking absolute value.

When the cloud device 100 executes Step 502 and Step 506, the first type error $e_{11}$' may be $e_{11}$'=$|T-F_{11}|^2$, and the second type error $e_{21}$' may be $e_{21}$'=$|T-F_{21}|^2$, where $|\cdot|$ represents the operation of taking absolute value.

In Step 510, in an embodiment, if a number R of the first type predicted demands and a number N of the second type predicted demands are both 1 (i.e., R = N = 1), the cloud device 100 may compute the first type weighting $w_{11}$ as $w_{11}$= $e_{21}/(e_{11}+e_{21})$, and compute the second type weighting $w_{21}$ as $w_{21}$=$e_{11}/(e_{11}+e_{21})$, and not limited thereto. In Step 510, the cloud device 100, in an embodiment, may compute the combined predicted demand $P_{CMB}$ as $P_{CMB}$=$w_{11}\times P_{11}+w_{21}\times P_{21}$, and not limited thereto.

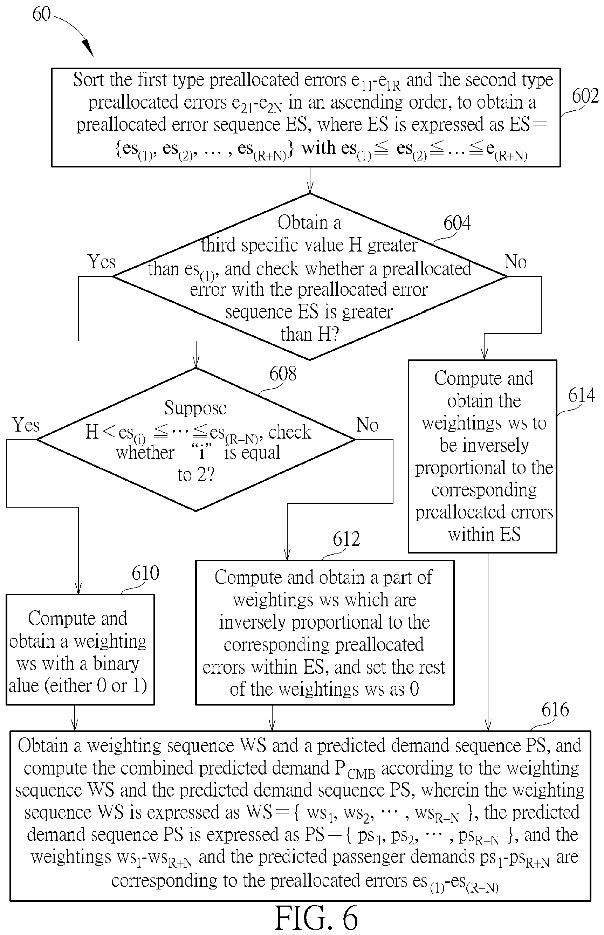

In an embodiment, if the number R of the first type predicted demands and the number N of the second type predicted demands are both larger than or equal to 1, the cloud device 100 may use a process 60 to compute the first type weightings and the second type weightings, wherein the process 60 is an embodiment of Step 510. As shown in FIG. 6, the process 60 comprises the following steps:

Step 602: Sort the first type preallocated errors $e_{11}$-$e_{1R}$ and the second type preallocated errors $e_{21}$-$e_{2N}$ in an ascending order, to obtain a preallocated error sequence ES, where ES is expressed as ES =$\{es_{(1)}, es_{(2)}, \ldots , es_{(R+N)}\}$ with $es_{(1)} \leqq es_{(2)} \leqq \ldots \leqq es_{(R+N)}$.

Step 604: Obtain a third specific value H greater than $es_{(1)}$, and check whether a preallocated error with the preallocated error sequence ES is greater than H? If there is no preallocated error within ES which is greater than H, go to Step 614; otherwise, if there is at least one preallocated error within ES which is greater than H, go to Step 608.

Step 608: Suppose H<$es_{(i)} \leqq \ldots \leqq es_{(R+N)}$, check whether "i" is equal to 2? If i=2, go to Step 610; otherwise, if i#2, go to Step 612.

Step 610: Compute and obtain a weighting ws with a binary value (either 0 or 1).

Step 612: Compute and obtain a part of weightings ws which are inversely proportional to the corresponding preallocated errors within ES, and set the rest of the weightings ws as 0.

Step 614: Compute and obtain the weightings ws to be inversely proportional to the corresponding preallocated errors within ES.

(continued)

| Step 616: | Obtain a weighting sequence WS and a predicted demand sequence PS, and compute the combined predicted demand $P_{CMB}$ according to the weighting sequence WS and the predicted demand sequence PS, wherein the weighting sequence WS is expressed as WS=$\{ws_1, ws_2, ... , ws_{R+N}\}$, the predicted demand sequence PS is expressed as PS=$\{ps_1, ps_2,...,ps_{R+N}\}$, and the weightings $ws_1$-$ws_{R+N}$ and the predicted passenger demands $ps_1$-$ps_{R+N}$ are corresponding to the preallocated errors $es_{(1)}$-$es_{(R+N)}$. |
|---|---|

For example, suppose that the number R of the first type predicted demands is 2 (R=2) and the number N of the second type predicted demands is 3 (N=3), and the first type preallocated errors $e_{11}$-$e_{12}$ and the second type preallocated errors $e_{21}$-$e_{23}$ are $e_{11}$=5, $e_{12}$=3, $e_{21}$=1, $e_{22}$=2, $e_{23}$=4. In this case, after the cloud device 100 executes Step 602, and the cloud device 100 may obtain the preallocated error sequence ES as ES=$\{es_{(1)}=1, es_{(2)}=2, es_{(3)}=3, es_{(4)}=4, es_{(5)}=5\}$.

In an embodiment, if the third specific value H is 3.5, after the cloud device 100 executes Step 604, and the cloud device 100 would go to Step 608. At Step 608, since H=3.5 and i=4, the cloud device 100 would go to Step 612. In Step 612, the cloud device 100 may compute the weightings $ws_1$, $ws_2$, $ws_3$ corresponding to the preallocated errors $es_{(1)}$, $es_{(2)}$, $es_{(3)}$, such that $ws_1$: $ws_2$: $ws_3$ =1/$es_{(1)}$ : 1/$es_{(2)}$ : 1/$es_{(3)}$ and $ws_1$+$ws_2$+$ws_3$=1. In addition, the cloud device 100 would set the weightings $ws_4$, $ws_5$ corresponding to the preallocated errors $es_{(1)}$, $es_{(2)}$ as 0. In other words, in Steps 612 and 616, the cloud device 100 would obtain the weighting sequence WS as WS=$\{ws_1=6/11, ws_2=3/11, ws_3=2/11, ws_4=0, ws_5=0\}$.

In an embodiment, when the third specific value H is 1.5, after the cloud device 100 executes Step 604, and the cloud device 100 would go to Step 608. At Step 608, since H=1.5 and i=2, the cloud device 100 would go to Step 610. In other words, in Steps 610 and 616, the cloud device 100 would obtain the weighting sequence WS as WS=$\{ws_1=1, ws_2=0, ws_3=0, ws_4=0, ws_5=0\}$.

In an embodiment, when the third specific value H is 5.5, after the cloud device 100 executes Step 604, and the cloud device 100 would go to Step 614. In Step 614, the cloud device 100 may compute the weightings $ws_1$, $ws_2$, $ws_3$, $ws_4$, $ws_5$ corresponding to the preallocated errors $es_{(1)}$, $es_{(2)}$, $es_{(3)}$, $es_{(4)}$, $es_{(5)}$, such that $ws_1$: $ws_2$: $ws_3$: $ws_4$: $ws_5$=1/$es_{(1)}$:1/$es_{(2)}$:1/$es_{(3)}$:1/$es_{(4)}$:1/$es_{(5)}$ and $ws_1$+$ws_2$+$ws_3$+$ws_4$+$ws_5$=1. In other words, in Steps 614 and 616, the cloud device 100 would obtain the weighting sequence WS as WS=$\{ws_1=60/137, ws_2=30/137, ws_3=20/137, ws_4=15/137, ws_5=12/137\}$.

In Step 616, after the cloud device 100 obtains the weighting sequence WS and the predicted demand sequence

$$= \sum_{i=1}^{5} ws_i ps_i$$

PS, the cloud device 100 may compute $P_{CMB}$ at Step 512, wherein details of obtaining the predicted passenger demands $ps_1$-$ps_5$ within the predicted demand sequence PS may be referred in the paragraphs stated in the above, which is not narrated herein for brevity. Moreover, the weighting $ws_1$ is the weighting $w_{21}$ corresponding to the preallocated error $e_{21}$, the weighting $ws_2$ is the weighting $w_{22}$ corresponding to the preallocated error $e_{22}$, the weighting $ws_3$ is the weighting $w_{12}$ corresponding to the preallocated error $e_{12}$, the weighting $ws_4$ is the weighting $w_{23}$ corresponding to the preallocated error $e_{23}$, the weighting $ws_5$ is the weighting $w_{11}$ corresponding to the preallocated error $e_{11}$. In addition, the weightings $w_{11}$-$w_{12}$ are the first type weightings $w_{11}$-$w_{12}$, the weighting $w_{21}$-$w_{23}$ are the second type weightings $w_{21}$-$w_{23}$.

Notably, bringing the third specific value H would provide/apply different weightings according to different levels of error. When the preallocated error is larger than H, the method corresponding to the preallocated error would not be adopted/considered. That is, the corresponding weighting would be set as 0. In other words, the third specific value H in the process 60 may take multiple statistical prediction models into consideration (or fuse multiple statistical prediction models). Therefore, the cloud device 100 not only represents the optimal single prediction model (with the lowest preallocated error), but also take all multiple statistical prediction models/methods into consideration and provides their corresponding weightings according to the preallocated error. In addition, the cloud device 100 may represent some better prediction models. In other words, performing the process 60 would bring the cloud device 100 more flexible of fusing multiple prediction models.

After the cloud device 100 computes the combined predicted demand $P_{CMB}$, the terminal device 120 may receive the combined predicted demand $P_{CMB}$ corresponding to the geographical area ZN at the specific time period TM from the cloud device 100. The taxi driver may decide the driving direction according to the combined predicted demand $P_{CMB}$ corresponding to the geographical area ZN at the specific time period TM.

In general, when some large scale activities are held or some special event is happening, the first type predicted demands $P_{11}$-$P_{1R}$ generated by the cloud device 100 in Step 206 using Regression Analysis method would have better accuracy, and the second type predicted demands $P_{21}$-$P_{2N}$ generated by the cloud device 100 in Step 208 using Random Forest method would have worse accuracy. On the other hand, when no large activities are held or no special event is happening, the second type predicted demands $P_{21}$-$P_{2N}$ generated by the cloud device 100 in Step 208 using Random Forest method would have better accuracy, and the first type predicted demands $P_{11}$-$P_{1R}$ generated by the cloud device 100 in Step 206 using Regression Analysis method would have worse accuracy. In such a situation, the cloud device 100 utilizes Step 210 to combine the predicted demands generated by Regression Analysis in Step 206 and the predicted demands generated by Random Forest in Step 208, so as to enhance an accuracy of passenger demand prediction.

Notably, the embodiments stated in the above are utilized for illustrating the concept of the present invention/application. Those skilled in the art may make modifications and alterations accordingly, and not limited herein. For example, in Step 510, the cloud device 100 computes the first type weighting $w_{11}$ as $w_{11}= e_{21}/(e_{11}+e_{21})$ and computes the second type weighting $w_{21}$ as $w_{21}=e_{11}/(e_{11}+e_{21})$, which is not limited thereto. As long as the first type weighting $w_{11}$ and the first type preallocated error $e_{11}$ have decreasing or inverse proportional relationship, and the second type weighting $w_{21}$ and the second type preallocated error $e_{21}$ have decreasing or inverse proportional relationship, i.e., the first type weighting $w_{11}$ would decrease as the first type preallocated error $e_{11}$ increases and the second type weighting $w_{21}$ decreases as the second type preallocated error $e_{21}$ increases, the requirements of the present invention is satisfied, which is within the scope of the present invention. In addition, the processing unit 102 may be a central processing unit (CPU), which is not limited thereto. The storage unit 104 may comprise read-only memory (ROM), random-access memory (RAM) or non-volatile memory such as electrically erasable programmable read only memory (EEPROM) or Flash Memory, and not limited thereto.

In summary, the present invent utilizes Regression Analysis method and Random Forest method to predict the passenger demand, and combines the prediction results coming from the Regression Analysis method and the Random Forest method, so as to enhance the accuracy of passenger demand prediction.

**Claims**

1.  A passenger demand prediction method (20), configured to predict a passenger demand of a geographical area at a specific time period, the passenger demand prediction method **characterized by** comprising:

    obtaining a plurality of measurements corresponding to a plurality of affecting factors, wherein the plurality of affecting factors are factors affecting the passenger demand of the geographical area at the specific time period (202);
    obtaining a basic passenger demand corresponding to the geographical area at the specific time period (204);
    computing at least one first type predicted demands according to the plurality of affecting factors and the basic passenger demand (206);
    selecting at least one important affecting factor from the plurality of affecting factors, and computing at least one second type of predicted demands according to the at least one important affecting factor (208); and
    computing a combined predicted demand according to the first type predicted demands and the second type predicted demands (210).

2.  A passenger demand prediction system (10), configured to predict a passenger demand of a geographical area at a specific time period, the passenger demand prediction system **characterized by** comprising:

    a cloud device (100), comprising:

       a processing unit (102);
       a storage unit (104), configured to store a program code (106), wherein the program code is configured to instruct the processing unit to execute the following steps:

          obtaining a plurality of measurements corresponding to a plurality of affecting factors, wherein the plurality of affecting factors are factors affecting the passenger demand of the geographical area at the specific time period (202);
          obtaining a basic passenger demand corresponding to the geographical area at the specific time period (204);
          computing at least one first type predicted demands according to the plurality of affecting factors and the basic passenger demand (206);
          selecting at least one important affecting factor from the plurality of affecting factors, and computing at least one second type of predicted demands according to the at least one important affecting factor (208); and

computing a combined predicted demand according to the first type predicted demands and the second type predicted demands (210); and

a terminal device (120), configured to receive the combined predicted demand.

3. The passenger demand prediction method of claim 1 or the passenger demand prediction system of claim 2, **characterized in that** the step of obtaining the basic passenger demand corresponding to the geographical area at the specific time period (204) comprises:

obtaining a historical demand in the geographical area corresponding to a plurality of time periods according to an original data (302); and
computing a statistic of the historical demand to obtain the basic passenger demand (304).

4. The passenger demand prediction method of claim 1 or the passenger demand prediction system of claim 2, **characterized in that** the step of computing the first type predicted demands according to the plurality of affecting factors and the basic passenger demand (206) comprises:

computing a plurality of variations of the passenger demand resulted from the plurality of affecting factors;
selecting at least one significant affecting factor from the plurality of affecting factors according to the plurality of variations, wherein at least one variation corresponding to the at least one significant affecting factor among the plurality of variations is greater than a first specific value; and
computing the first type predicted demands according to the at least one significant affecting factor and the basic passenger demand.

5. The passenger demand prediction method of claim 1 or the passenger demand prediction system of claim 2, **characterized in that** the step of selecting the at least one important affecting factor from the plurality of affecting factors (208) comprises:

computing a plurality of significances of the plurality of affecting factors on the passenger demand; and
when a first significance corresponding to a first affecting factor within the plurality of affecting factors is greater than a second specific value, selection of the first affecting factor as an important affecting factor.

6. The passenger demand prediction method or the passenger demand prediction system of claim 5, **characterized in that** a significance within the plurality of significances is between 0 and 1.

7. The passenger demand prediction method of claim 1 or the passenger demand prediction system of claim 2, **characterized in that** the step of computing the combined predicted demand according to the first type predicted demands and the second type predicted demands (210) comprises:

computing first type preallocated errors corresponding to the first type predicted demands (504);
computing second type preallocated errors corresponding to the second type predicted demands (508);
computing first type weightings corresponding to the first type predicted demands and second type weightings corresponding to the second type predicted demands according to the first type preallocated errors and the second type preallocated errors (510); and
computing the combined predicted demand according to the first type predicted demands, the second type predicted demands, the first type weightings and the second type weightings (512);
wherein the first type weightings decrease as the first type preallocated errors increase, and the second type weightings decrease as the second type preallocated errors increase.

8. The passenger demand prediction method or the passenger demand prediction system of claim 7, **characterized in that** the step of computing the first type weightings and the second type weightings according to the first type preallocated errors and the second type preallocated errors (510) comprises:

computing a first weight within the first type weightings, wherein the first weight is inversely proportional to a first preallocated error corresponding to the first weight among the first type preallocated errors; and
computing a second weight within the second type weightings, wherein the second weight is inversely proportional to a second preallocated error corresponding to the second weight among the second type preallocated errors.

9. The passenger demand prediction method or the passenger demand prediction system of claim 7, **characterized in that** the step of computing the first type weightings and the second type weightings according to the first type preallocated errors and the second type preallocated errors (510) further comprises:

obtaining a third specific value;
determining whether the first type preallocated errors and the second type preallocated errors are greater than the third specific value, and generating a determining result; and
computing the first type weightings and the second type weightings according to the determining result.

10. The passenger demand prediction method or the passenger demand prediction of claim 7, **characterized in that** the step of computing the combined predicted demand according to the first type predicted demands, the second type predicted demands, the first type weightings and the second type weightings (512) comprises:

computing the combined predicted demand as $\sum_{j=1}^{R} w_{1j} P_{1j} + \sum_{v=1}^{N} w_{2v} P_{2v}$ ;

wherein $w_{11}$-$w_{1R}$ represents the first type weightings, $w_{21}$-$w_{2N}$ represents the second type weightings, $P_{11}$-$P_{1R}$ represents the first type predicted demands, and $P_{21}$-$P_{2N}$ represents the second type predicted demands.

10

100

Cloud Device

102

Processing Unit

104

Storage Unit

106

$P_{CMB}$

120

Terminal Device

FIG. 1

20

200

Start

Obtain a plurality of measurements $a_1$-$a_M$ corresponding to a plurality of affecting factors $\alpha_1$-$\alpha_M$, wherein the plurality of affecting factors $\alpha_1$-$\alpha_M$ are factors affecting the passenger demand of the geographical area ZN in the specific time period TM

202

Obtain a basic passenger demand BSC corresponding to the geographical area ZN at the specific time period TM

204

Compute at least one first type predicted demands $P_{11}$-$P_{1R}$ according to the plurality of affecting factors $\alpha_1$-$\alpha_M$ and the basic passenger demand BSC

206

Selecting at least one important affecting factor from the plurality of affecting factors $\alpha_1$-$\alpha_M$, and compute at least one second type of predicted demands $P_{21}$-$P_{2N}$ according to the at least one important affecting factor

208

Compute a combined predicted demand $P_{CMB}$ according to the first type predicted demands $P_{11}$-$P_{1R}$ and the second type predicted demands $P_{21}$-$P_{2N}$

210

212

End

FIG. 2

30

| Obtain the historical demand HS in the geographical area ZN corresponding to a plurality of time periods according to the original data OG | 302 |

| Compute the statistic of the historical demand HS, so as to obtain the basic passenger demand BSC | 304 |

# FIG. 3

$40$

| Classify the historical demand HS within the area into a plurality of subsets by repeated sampling | $402$ |

| Constructuct the regression/decision tree model for each subset, and compute the significances of the affecting factor $\alpha_1$- $\alpha_M$ being adopted into the regression/decision trees | $404$ |

| Obtain the significances $q_1$-$q_M$ as effectiveness of the affecting factor $\alpha_1$- $\alpha_M$ being adopted into the regression/decision trees, wherein the significances $q_1$-$q_M$ may be the probability or the over-fitting accurate added-value | $406$ |

| Determine whether the significances $q_1$-$q_M$ are greater than the second specific value, so as to select the important affecting factors $\alpha_{<1>}$- $\alpha_{<K'>}$ | $408$ |

| Compute the second type predicted demands $P_{21}$-$P_{2N}$ according to the measurements $a_{<1>}$-$a_{<K'>}$ of the important affecting factors $\alpha_{<1>}$- $\alpha_{<K'>}$ | $410$ |

## FIG. 4

50

502

Execute Step 206 at the time instant $t_{-1}$ to preallocate the first type preallocated demands $F_{11}$-$F_{1R}$ corresponding to the time instant $t_0$, obtain the practical passenger demand T at the time instant $t_0$ from the taxi transport management information system, and compute the first type errors $e_{11}'$-$e_{1R}'$ according to the first type preallocated demands $F_{11}$-$F_{1R}$ and the practical passenger demand T

504

Compute the first type preallocated errors $e_{11}$-$e_{1R}$

506

Execute Step 208 at the time instant $t_{-1}$ to predict the second type preallocated demands $F_{21}$-$F_{2N}$ corresponding to the time instant $t_0$, obtain the practical passenger demand T at the time instant $t_0$ from the taxi transport management information system, and compute the second type errors $e_{21}'$-$e_{2N}'$ according to the second type preallocated demands $F_{21}$-$F_{2N}$ and the practical passenger demand T

Compute the second type preallocated errors $e_{21}$-$e_{2N}$    508

510

Compute the first type weightings $w_{11}$-$w_{1R}$ corresponding to the first type predicted demands $P_{11}$-$P_{1R}$ and the second type weightings $w_{21}$-$w_{2N}$ corresponding to the second type predicted demands $P_{21}$-$P_{2N}$ according to the first type preallocated errors $e_{11}$-$e_{1R}$ and the second type preallocated errors $e_{21}$-$e_{2N}$

512

Compute the combined predicted demand $P_{CMB}$ according to the first type predicted demands $P_{11}$-$P_{1R}$, the second type predicted demands $P_{21}$-$P_{2N}$, the first type weightings $w_{11}$-$w_{1R}$ and the second type weightings $w_{21}$-$w_{2N}$

FIG. 5

60

Sort the first type preallocated errors $e_{11}$-$e_{1R}$ and the second type preallocated errors $e_{21}$-$e_{2N}$ in an ascending order, to obtain a preallocated error sequence ES, where ES is expressed as ES = $\{es_{(1)}, es_{(2)}, \ldots, es_{(R+N)}\}$ with $es_{(1)} \leqq es_{(2)} \leqq \ldots \leqq e_{(R+N)}$    602

Obtain a third specific value H greater than $es_{(1)}$, and check whether a preallocated error with the preallocated error sequence ES is greater than H?    604

Yes

No

Suppose $H < es_{(i)} \leqq \cdots \leqq es_{(R-N)}$, check whether "i" is equal to 2?    608

Yes

No

Compute and obtain the weightings ws to be inversely proportional to the corresponding preallocated errors within ES    614

Compute and obtain a part of weightings ws which are inversely proportional to the corresponding preallocated errors within ES, and set the rest of the weightings ws as 0    612

Compute and obtain a weighting ws with a binary value (either 0 or 1)    610

Obtain a weighting sequence WS and a predicted demand sequence PS, and compute the combined predicted demand $P_{CMB}$ according to the weighting sequence WS and the predicted demand sequence PS, wherein the weighting sequence WS is expressed as WS = $\{ ws_1, ws_2, \cdots, ws_{R+N} \}$, the predicted demand sequence PS is expressed as PS = $\{ ps_1, ps_2, \cdots, ps_{R+N} \}$, and the weightings $ws_1$-$ws_{R+N}$ and the predicted passenger demands $ps_1$-$ps_{R+N}$ are corresponding to the preallocated errors $es_{(1)}$-$es_{(R+N)}$    616

FIG. 6

Europäisches
Patentamt

European
Patent Office

Office européen
des brevets

**EUROPEAN SEARCH REPORT**

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2002/019760 A1 (MURAKAMI HIROSHI [JP] ET AL) 14 February 2002 (2002-02-14) * abstract * * paragraph [0008] - paragraph [0012] * * paragraph [0146] * * figures 1,2 * ----- | 1-10 | INV. G06Q10/06 G06Q10/08 G06Q10/04 G06Q30/02 |

TECHNICAL FIELDS
SEARCHED (IPC)

G06Q

The present search report has been drawn up for all claims

| Place of search | Date of completion of the search | Examiner |
|---|---|---|
| Munich | 3 July 2018 | Härdeman, David |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

**EP 3 416 112 A1**

## ANNEX TO THE EUROPEAN SEARCH REPORT
## ON EUROPEAN PATENT APPLICATION NO.

EP 18 17 5972

This annex lists the patent family members relating to the patent documents cited in the above-mentioned European search report.
The members are as contained in the European Patent Office EDP file on
The European Patent Office is in no way liable for these particulars which are merely given for the purpose of information.

03-07-2018

| Patent document cited in search report | Publication date | Patent family member(s) | Publication date |
|---|---|---|---|
| US 2002019760 A1 | 14-02-2002 | NONE | |

EPO FORM P0459

For more details about this annex : see Official Journal of the European Patent Office, No. 12/82

19